# EUROPÄISCHE PATENTSCHRIFT

(11) **EP 0 900 472 B1**
(45) Veröffentlichungstag und Bekanntmachung des Hinweises auf die Patenterteilung: **24.07.2002**
(21) Anmeldenummer: 97922901.0
(22) Anmeldetag: 09.05.1997
(51) Int. Cl.: H02M 7/00

(54) **UMRICHTERSYSTEM**
INVERTER SYSTEM
SYSTEME ONDULEUR

(30) Priorität: 21.05.1996 DE 19620442
(43) Veröffentlichungstag der Anmeldung: 10.03.1999
(73) Patentinhaber: SIEMENS AKTIENGESELLSCHAFT, 80333 München (DE)
(72) Erfinder: LINDEN, Wilhelm, D-91056 Erlangen (DE); SCHORRIG, Hartmut, D-91341 Röttenbach (DE)
(86) Internationale Anmeldenummer: DE9700943
(87) Internationale Veröffentlichungsnummer: WO9744887

(56) Entgegenhaltungen:
- EP-A- 0 469 872
- EP-A- 0 469 873
- US-A- 5 187 656
- US-A- 5 499 177
- T. SCHÜTZE ET AL.: "Low Floor Trams with IGBT-3-level Inverter." FIFTH EUROPEAN CONFERENCE ON POWER ELECTRONICS AND APPLICATIONS., 16.September 1993, BRIGHTON, UK, Seiten 92-96, XP000416848
- D.H.E.BUTLER ET AL.: "Compensation of a digitally controlled static power converter for the damping of rolling mill torsional vibration." CONFERENCE RECORD OF THE 1990 IEEE INDUSTRY APPLICATIONS SOCIETY ANNUAL MEETING, 12.Oktober 1990, SEATTLE, US, Seiten 583-588, XP000204084
- F.R. VIDIL ET AL.: "New 1675-mm hot strip mill for An Feng Steel Co., Taiwan." IRON & STEEL ENGINEER, Bd. 67, Nr. 11, November 1990, PITTSBURG, US, Seiten 39-46, XP000173492
- PATENT ABSTRACTS OF JAPAN vol. 97, no. 3, 31.März 1997 & JP 08 289591 A (YASKAWA ELECTRIC CORP.)

## Beschreibung

Die Erfindung betrifft ein Umrichtersystem mit mehreren Umrichtern, insbesondere zur Versorgung von elektrischen Antrieben mit Wechselstrom bzw. mit Wechselspannung mit speziell angepaßter Frequenz oder zur dynamischen Netzkompensation, wobei diese Umrichter abschaltbare Leistungshalbleiter aufweisen.

Bei Umrichtern bis zu mittleren Leistungen (1.. MW) kann sich die Steuer- und Regelung und der Leistungsteil in einer Einheit befinden. Alle Verbindungen werden dann sinnvoll als Einzelsignalverbindung ausgeführt. Es gibt keine räumlich getrennten Leistungsteile

Bei Umrichtern größerer Leistung sowie Umrichten im Megawatt-Bereich, ist jedoch die Trennung von Steuer- und Regelung und Leistungsteil z.T. technisch sinnvoll oder gewünscht. Hier tritt insbesondere das Problem der Ansteuerung räumlich getrennter Leistungsschränke aus einer Steuer- und Regelung auf. Bei diesen Anwendungen wurden bisher Einzelsignale in Kabelbäumen usw. übertragen. Die Synchronität des Schaltens der Leistungsventile ist damit kein Problem, da lediglich Laufzeiten in Leitungen (Induktivität von Leitungen usw.) im ns-Bereich auftreten.

Diese Vorgehensweise ist jedoch mit verschiedenen Problemen behaftet. So steigen z. B. mit der umfangreichen Verkabelung die Kosten für ein nichtintegriertes Steuerungssystem, da eine Einzelverkabelung sehr teuer ist. Ferner ist die Prüfung von Verbindungen bei Einzelverkabelung aufwendig und teuer, da jede einzelne Verbindung überprüft werden muß. Aufgrund des hohen Verkabelungsaufwandes kommt aus wirtschaftlichen Gründen eine redundante Ausführung dieser Verkabelung häufig nicht in Frage, was dazu führt, daß der Umrichter bei Ausfall einer einzigen Verbindung ausfällt.

Die Punkt-zu-Punkt-Verbindungen der bekannten Umrichter sind Kupferleitungen, wodurch weitere Probleme durch elektrische bzw. elektromagnetische Störstreuung von außen oder vom Umrichter selbst erfolgen. Die Notwendigkeit von Potentialtrennungen für die einzelnen Leitungen, um Masseschleifen zu vermeiden, führt zu zusätzlichen Kosten für ein derartiges Umrichtersystem.

Aufgabe der Erfindung ist es, ein Umrichtersystem mit mehreren Umrichtern im Megawattbereich anzugeben, das die obengenannten Probleme umgeht.

Die Aufgabe wird erfindungsgemäß durch ein Umrichtersystem mit mehreren Umrichtern, die Leistungshalbleiter aufweisen, die abschaltbar sind, gelöst
- wobei der Stromfluß durch die Leistungshalbleiter durch Einstellung der Ein- bzw. Ausschaltzeitpunkte für die Leistungshalbleiter beeinflußbar ist,
- wobei die gewünschte Gesamtspannung bzw. der gewünschte Gesamtstrom am Ausgang der Umrichter durch geeignete Steuerung der Ein- bzw. der Ausschaltzeitpunkte der einzelnen Leistungshalbleiter der Umrichterr beeinflußbar ist,
- wobei diesen Umrichtern zumindest ein von ihm räumlich getrenntes Automatisierungsgerät, das logisch mit den Leistungshalbleitern über zumindest ein Bussystem verbunden ist, zugeordnet ist, worüber die gewünschten Ein- bzw. Ausschaltzeitpunkte der einzelnen Leistungshalbleiter einstellbar sind,
- wobei jedem Umrichter eine frei programmierbare Busschnittstelle zugeordnet ist, die die gewünschten Ein- bzw. Ausschaltzeitpunkte für die Leistungshalbleiter des Umrichters empfängt und die Leistungshalbleiter zum gewünschten Zeitpunkt ein- bzw. ausschaltend ausgebildet ist,
- und wobei das Automatisierungsgerät oder ein Umrichter ein Zeitnormal sendend ausgebildet ist, das die einzelnen frei programmierbaren Schnittstellen mit einer Präzision von 10µs oder genauer zeitlich synchronisiert.

Durch die Verwendung des seriellen Bussystems ist es möglich, die einzelnen Punkt-zu-Punkt-Verbindungen von Automatisierungsgerät zu Leistungshalbleiter einzusparen. Gemäß der erfindungsgemäßen Lösung ist es ferner möglich, die Verbindung zwischen Automatisierungsgerät und Halbleitern redundant auszuführen, da dieses beim physikalischen Bussystem mit vertretbarem Aufwand möglich ist.

In einer vorteilhaften Ausgestaltung ist die Schicht 1 gemäß ISO-Norm 7496 als Lichtwellenleiter ausgebildet, wodurch elektromagnetische Störungen auf die Verbindung zwischen Automatisierungsgerät und Umrichter vermieden werden.

Weitere Vorteile und erfinderische Einzelheiten ergeben sich aus nachfolgender Beschreibung von Ausführungsbeispielen, anhand der Zeichnungen und in Verbindung mit den Unteransprüchen. Im einzelnen zeigen:
- FIG 1: ein erfindungsgemäßes Umrichtersystem,
- FIG 2: ein erfindungsgemäßes Umrichtersystem zur Steuerung eines Motors mit räumlich getrennten parallel geschalteten Leistungsteilen,
- FIG 3: ein erfindungsgemäßes Umrichtersystem mit einem integrierten Automatisierungsgerät und zwei räumlich getrennten Leistungsteilen,
- FIG 4: ein erfindungsgemäßes Umrichtersystem zur Steuerung eines Motors in Tandemschaltung,
- FIG 5: ein erfindungsgemäßes Umrichtersystem zur Steuerung eines Motors in Tandemschaltung in alternativer Ausgestaltung.

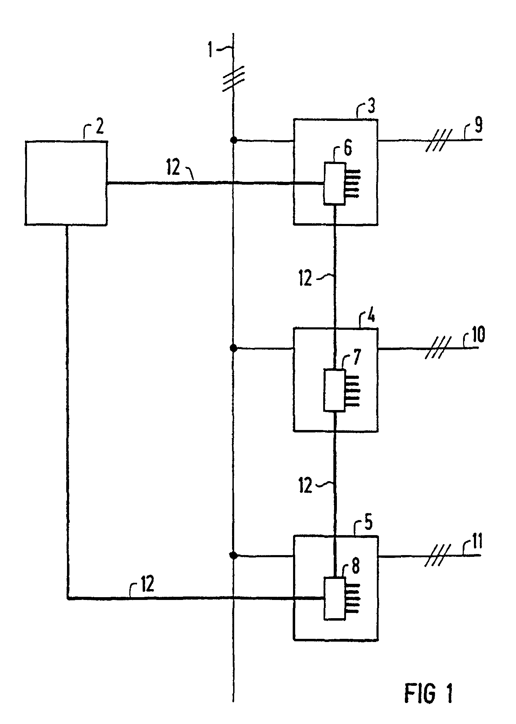

FIG 1 zeigt ein erfindungsgemäßes Umrichtersystem mit drei Umrichtern 3, 4 und 5, an deren Ausgang 9, 10 und 11 eine Wechselspannung anliegt. Die Umrichter 3, 4 und 5 sind in der beispielhaften Ausgestaltung in FIG 1 Wechselrichter. Sie können jedoch auch Umrichter sein. In diesem Falle liegt an den Ausgängen 9, 10 und 11 der Umrichter 3, 4 und 5 Gleichspannung an. Die Umrichter 3, 4 und 5 werden über ein Energieversorgungsnetz 1 mit elektrischer Energie versorgt. Zur Erzeugung von Gleichspannung bzw. -strom oder zur Erzeugung von Wechselspannung bzw. -strom mit geeigneter Frequenz weisen die Umrichter 3, 4 und 5 ein- und/oder ausschaltbare Leistungshalbleiter auf. Die Steuerung und Koordinierung der Leistungshalbleiter der Umrichter 3, 4 und 5 erfolgt mittels eines Automatisierungsgerätes 2, das über Lichtwellenleiter 12 mit intelligenten Schnittstellen 6, 7 und 8 der Umrichter 3, 4 und 5 verbunden ist. Über die intelligenten Schnittstellen 6, 7 und 8 werden die Steuerungsbefehle des Automatisierungsgerätes 2 an die Leistungshalbleiter der entsprechenden Umrichter 3, 4 und 5 weitergeleitet.

Die intelligenten Schnittstellen 6, 7 und 8 werden synchronisiert. Wenn nur ein Umrichter vorhanden ist oder Umrichter unabhängig voneinander schalten dürfen, dann spielt die Synchronisierung der Leistungsteile keine Rolle. Die erfindungsgemäße Lösung bezieht sich dann im wesentlichen auf den Einsatz eines schnellen seriellen Bussystemes anstatt vieler Einzelverbindungen für die Kopplung Steuer- und Regelung mit Leistungsteil, wobei ein Umrichter zumeist Ausmaße in der Größenordnung von z.B. 2m x 1m x 2m hat.

Für die serielle Übertragung wird kein standardisiertes Übertragungsprotokoll wie Ethernet, Profibus o.a. benutzt, da bei diesen der Durchgriff auf die letzte µs insbesondere bei der Verarbeitung der Information nicht gewährleistet wäre. Statt dessen wurde ein eigenes Protokoll definiert, das eigenen Gegebenheiten angepaßt werden kann.

Als Hardwarebasis für die seriell-parallel-Wandlung in Verbindung mit der Taktrückgewinnung wurde ein Schaltkreispaar der Firma AMD: TAXIChip (R) AM7968 und AM7969 eingesetzt. Diese Schaltkreise bestimmen die serielle Codierung der Information. Auch eine andere Art der seriell-parallel-Wandlung mit ähnlichen Eigenschaften kann stattdessen eingesetzt werden.

Kennzeichnend für die parallel-seriell- und seriell-parallel-Wandlung der TAXIChip-Schaltkreise ist:
- Codierung eines parallelen Bytes (8 bit) erfolgt in 10 seriellen Bit-Informationen in zwei sogenannten 4B-5B-Codierungen.
- Die serielle Information ist damit so beschaffen, daß nie mehr als 3 gleiche Bitinformationen hintereinander stehen. Nach spätestens 3 seriellen Bit kommt ein Signalwechsel auf der seriellen Seite. Damit ist über eine PLL-Schaltung (Phase Look Loop) die Taktrückgewinnung des Schiebetaktes aus der seriellen Information möglich.
- Ein bestimmter Signalverlauf, der aufgrund der 4B-5B-Codierung als Datencode nie vorkommt, wird als Sync-Zeichen erkannt. Damit wird die Byte-Synchronisation der seriellen-parallel-Wandlung erreicht.
   Bei jedem Byte der seriell-parallel-Wandlung, auch bei SYNC-Zeichen-Empfang, wird am IC eines von zwei Strobe-Signalen erzeugt, entweder Command-Strobe oder Daten-Strobe bei erkannten Daten-Codierungen.
- Bestimmte Codierungen des seriellen Signales, die keine Datencodierungen sind, werden als Command-Codierungen erkannt. Bei der verwendeten 8-bit Datenbreite mit der 4B-5B-Codierung gibt es 10 nutzbare Commdand-Codierungen.
   Diese werden bei der erfindungsgemäßen Lösung als Daten-Rahmen verwendet (Beginn und Ende-Kennzeichnung der Datentelegramme).
- Das Auftreten bestimmter Codierungen im seriellen Signal, die weder dem SYNC-Zeichen noch den Command-Codierungen und Datencodierungen zuzuordnen sind, werden als Datenübetragungsstörung (Violation) erkannt und an einem Pin des IC mit Strobe synchron angezeigt.
- Es gibt auch die Möglichkeit, 9 oder 10 bits pro Datenwort zu übertragen, mit einer entsprechenden 5B/6B-Codierung. Diese wird bei der erfindungsgemäßen Lösung nicht verwendet.

Die Baudrate des seriellen Signales wurde mit 40 MBaud gewählt. Das entspricht einer Datenrate von 2 16-bit-Worten pro µs.

Alle zu übertragenden Daten werden in Telegrammen organisiert. Die Telegramme beginnen und enden mit einem Command-Byte, von den TAXIChips als solche erkannt.

Die ersten 5 Datenbytes nach einem Command-Byte des Telegrammbeginns haben Sonderbedeutungen für die Hardwaresteuerung des Telegrammverkehrs:
- 1 Byte Absendercode (4 bit) und Priorität (max. 4 bit, genutzt 3 bit)
- 2 Byte Ziel-Adresse der Information, jedes bit aus 16 ist einer Station zugeordnet, es können somit eine, mehrere oder alle Stationen adressiert werden.
- 1 Byte BufferNr der Information in 6 bit und 1 bit Information, ob beim Empfang Interrupt ausgelöst werden soll.
   Aufgrund der BufferNr werden die Daten in den richtigen RAM-Bereich in der Empfängerstation (Teil des CPU-Rams, Zugriff über DMA (Direct Memory Access) geschrieben. Damit ist kein Softwareaufwand für die Rangierung von Daten in die richrigen Arbeitsbereiche notwendig.
- 1 Byte Wiederholung der BufferNr mit XOR-Maske und verschobenen Bits, als Informationssicherung. Das Telegramm ist nur gültig, wenn dieses Byte zum vorangegangenen paßt. Die Überprüfung erfolgt durch Hardware.

Weitere Bytes am Kopf des Telegrammes sind für die Softwareverarbeitung mit Standardbedeutungen belegt: Command, Kenn-Nummer, Prozeß-Nummer, Länge. Auch hier gibt es eine Idee, wie softwareseitig unvollständig übertragene Telegramme erkannt werden. Problem ist, daß bei Hardwareempfang sofort in den Ziel-RAM die Dateninformation geschrieben wird. Sollte während der Übertragung eine Störung auftreten, dann wird das Schreiben der Daten nicht fortgesetzt. In Überlagerung mit dem vorigen RAM-Inhalt entsteht eine nichtkonsistente Information. Nicht unbedingt wird ein Interrupt ausgelöst, der die Störung anzeigt und softwareseitig auswertet. Um einem verarbeitenden Programm die Erkennung der Datenkonsistenz zu ermöglichen, wird folgendes Anordnung der Kopfinformationen gewählt:
- 2 Byte Länge des Telegrammes in Worte ä 16 bit. Nach Verarbeitung der Informationen kann hier 0 eingetragen werden. Wenn neue Daten übertragen werden, dann soll hier nicht 0 stehen. Damit kann erkannt werden: Neue Daten vorhanden. Das ist eine Semaphorenfunktion für die Verarbeitung der Daten.
- 2 Byte Kenn-Nummer des Telegrammes. Aufeinanderfolgende Telegramme sollten nie die gleiche Kennummer tragen, einfachkeitshalber sollte diese immer inkrementiert werden. Damit ist zum einen erkennbar, ob kein Telegramm fehlt, zum anderen ist erkennbar, daß ein neues Telegramm empfangen wurde.
- Wird bei einer Störung z.B. nur die Länge übertragen, dann kann aufgrund der unveränderten Kennummer erkannt werden, daß keine neuen Daten übertragen wurden.
- Auf dem Platz Datenbeginn + Telegrammlänge wird die Kennummer wie vorn nochmals wiederholt. Das ist der entscheidende Mechanismus zur Erkennung der Datenkonsistenz. Ist die Kennummer vorn und hinten nicht identisch, dann ist das Telegramm entweder eben noch in Übertragung begriffen oder es ist aufgrund eines Fehlers abgebrochen worden.

Jede Station kann zu jeder Zeit senden. Es gibt keinen ausgesuchten Master oder Mastertransfer.

Wenn im Ring ein Telegramm läuft, dann wird dieses Telegramm in jeder Station mit seiner Priorität im ersten Datenbyte nach dem Start-Command-Byte des Telegrammes registriert. Das Telegramm wird empfangen und um 2 Byte verzögert wieder der folgenden Station im Ring gesendet (Echo). Das ist unabhängig von der Frage, ob das Telegramm die jeweilige Station adressiert.

Steht eine Sendeanforderung in einer Station an, dann wird diese per Hardware zurückgestellt, wenn ein Empfangs- bzw. Echo-Telegramm mit gleicher oder höherer Priorität erkannt wird. Erst nach Ende des Echo-Telegrammes wird das zu sendende Telegramm ausgegeben. Die geschieht per Hardwareverarbeitung.

Wenn die Priorität des zu sendenden Telegrammes höher ist als ein im Empfang bzw. Echo erkannten Telegrammes, dann wird das Echo-Telegramm ignoriert und sofort das zu sendende Telegramm begonnen. Im Ring wird die sendende Station des niedriger priorisierten Telegrammes aufgrund des umgelaufenen Echos erkennen, daß ein anderes Telegramm beginnt, bevor das eigene zuende empfangen wurde. Aufgrunddessen wird diese Station die Sendeanforderung nach Beenden des Empfanges bzw. Echos des höherpriorisieren Telegrammes von vorn wiederholen.

Der gleiche Mechanismus greift auch, wenn 2 Stationen gleichzeitig zu senden beginnen und dies aufgrund der Durchlaufzeit im Ring gegenseitig nicht feststellen können. Bei gleicher Priorität der Telegramme entscheidet die Stationsnummer als Priorität.

Die Steuer- und Regelung ermittelt aufgrund von Softwarealgorithmen (z.B. Feldorientierte Regelung mit nachfolgendem Steuersatz) die Zeitpunkte bzw. Zeitdauer für einzelne Stellungen der Leistungsventile. Die Stellungen der Leistungsventile können dabei codiert übertragen werden, z.B. beim 3-Punkt-Umrichter mit 2 Bit für 3 sinnvolle Kombinationen der Ansteuerung von 4 Ventilen.

In einem Telegramm wird dann von der Steuer- und Regelung dem Leistungsteil mehrere aufeinanderfolgende in einer Abtastzeit der Software berechnete Ventilschaltbefehle mit Ventilstellung und Zeitpunkt oder Zeitdauer übermittelt. Mit diesen Informationen verbunden sind Kontrollinformationen und Abtastinformationen für die Analogwerterfassung.

Im Leistungsteil werden die Schaltinformationen abgearbeitet, indem die beim Telegrammempfang über Software in einen FIFO (First In First Out Buffer) eingeschriebenen Zeitdifferenzen oder Zeitpunkte und Schaltinformationen einzeln nacheinander nach Ablauf der jeweiligen Zeit herausgelesen werden. Ein Zeitzähler (Hardware) realisiert den richtigen Schaltzeitpunkt auf kleiner 1 us genau. Wenn die Information zum Analogwert-Triggern aus dem FIFO ausgelesen wird, wird per Hardware ein Integrator gelatched. Es wird im Leistungsteil ein Telegramm erzeugt, daß auf der Steuer- und Regelung den Abtastzeitinterrupt auslöst. In einem weiteren aus Zeitgründen danach erzeugten Telegramm werden Analogwerte gesendet, die im Abtastzeitinterrupt der Steuer- und Regelung verwendet werden.

Das Zeitregime wird damit von der Abarbeitung der Schaltinformationen im Leistungsteil bestimmt.

Im Leistungsteil ist für den Telegrammempfang und die Telegrammerzeugung eine umfangreiche Hardwareschaltung vorhanden, die in einem frei programmierbaren Logikschaltkreis (LCA, Typ Xilinx) realisiert ist. Die Erzeugung der Schaltinformationen wird ebenfalls über ein anderes LCA realisiert, ebenso die Erfassung und digitale Integration der Analogwerte. Die Verwendung von LCAs ist dabei technisch sinnvoll und aufgrund der Anpassung auf verschiedene Projekte (Anzahl von Ventilen usw.) ggf. zwingend, aber nicht zwingend aufgrund der erfindungsgemäßen Lösung.

Für die softwareseitige Verarbeitung der Telegrammdaten, Prüfung, Umrangierung in die LCAs und z.T. für Algorithmen der Steuer- und Regelung ist im Leistungsteil eine CPU (Central Processing Unit, Mikroprozessor) vorhanden, und zwar SAB C 165, 16-bit-Controller mit onchip-Funktionen. Die CPU ist komplettiert mit externem RAM 256 kByte und externem Flash-Eprom.

In der Unterstation werden auch Nebensignale der Steuer- und Regelung erfaßt wie Türschalter usw. (Binäre Überwachungen) bzw. Ansteuerung von Relais für Vorladung usw. Auch die Informationsübertragung von und zu diesen Hardwarekomponenten erfolgt über Telegramme mit Softwareauswerung.

Im Automatisierungssystem ist die gleiche Schaltung für die Telegrammerzeugung und Verarbeitung (LCA) vorhanden. Für die softwareseitige Auswertung der Telegramme ist auch die gleiche CPU C165 vorhanden. Die Ankopplung an die zentrale CPU für die Steuer- und Regelung, im vorliegenden Fall eine CPU-Baugruppe PM4 aus dem SIMADYN-D, wird DMA verwendet (Buskopplung). Dabei wird der LCA für die Telegrammverarbeitung von 2 CPU-Bussen unabhängig voneinander angesprochen. Es sind dort Schaltungen für eine Konfliktvermeidung bei gleichzeitigem oder widersprechendem Zugriff vorgesehen. Über eine weitere Spezialschaltung, im selben LCA wie die Telegrammsteuerung realisiert, ist ein direktes Beschreiben und Lesen des externen RAM zum C165 über den PM4-Bus (LE-Bus) möglich. Damit erfolgt der softwareseitige Datenaustausch Telegrammverkehr zu Steuer- und Regelung.

Wenn mehrere Leistungsteile mit einer Steuer- und Relegung mit dem erfindungsgemäßen Ringbus verbunden sind, dann sind diese in der bisher hier vorgestellten Lösung nicht synchronisiert. D.h. jeder Leistungsteil hat sein eigenes Zeitregime. Möglich ist dies, wenn die Leistungsteile nicht synchron schalten brauchen, z.B. bei Ansteuerung verschiedener Motoren. Das bringt aber Probleme mit sich wie schwebende Abtastezeiten.

Die Synchronisierung der Zeit in mehreren Leistungsteilen ist unbedingt notwendig, wenn diese räumlich getrennten Leistungsteile (Leistungsschränke) auf den selben Verbraucher (Motor) oder vom selben Netz schalten.

Die Synchronisierung der Zeit in mehreren Leistungsteilen ist wünschenswert, auch wenn verschiedene Verbraucher oder Netzphasen geschalten werden, weil damit Probleme mit schwebenden Abtastzeiten umgangen werden.

In der bisher dargestellten erfindungsgemäßen Lösung wird deutlich, daß das Zeitregime vom Leistungsteil aufgrund der Abarbeitung der Ventilansteuerinformationen geführt wird. Die Steuer- und Regelung ist im Zeitregime untergeordnet.

Die Synchronisierung der Zeiten in Leistungsteilen ist aus Sicht der Schaltung der Leistungsventile mindestens mit einer Genauigkeit von kleiner 10 µs nötig, Ungenauigkeiten dieser Größenordnung können mit Ausgleichsdrosseln abgefangen werden. Aufgrund der Wünsche nach Minimierung dieser Ausgleichsdrosseln bzw. feinfühlige Differnzstromregelung, ggf. bei höheren Ventilschaltfrequenzen, wie sie z.B. mit IGBT-Transisitoren möglich sind, soll die Zeitdifferenzen deutlich besser als 1 µs realisiert werden. Die erfindungsgemäße Lösung gestattet ohne Ausnutzung der Technik an der worst-case-Grenze eine Genauigkeit benachbarter Stationen mit +/- 50 ns und eine Genauigkeit weiter entfernter Stationen im Ring mit +/- Statiosanzahl mal 50 ns. Der verwendete Systemtakt von 20 MHz ist für das CPU-System standardgemäß und von den LCAs gut zu verarbeiten.

Die Anwendung der erfindungsgemäße Lösung mit Zeitsynchronisation ist auch dann notwendig, wenn die Steuer- und Regelung sich in einem von mehreren Leistungsteilen befindet und dort ohne seriellen Bus direkt mit dem Leistungsteil verbunden ist, ein zweiter Leistungsteil (Leistungsschrank) jedoch synchron mit dem ersten schalten muß.

Eine Station im Ring ist der Master-Timer und enthält einen Zeitzähler, der mindestens über 2 maximale Abtastzeiten hinweg die Zeit abbildet. Darüber hinaus kann der Zähler umlaufen. Die Auflösung der Zeitzählung beträgt z.B. 250 ns. Der Zähler mit 16 ms Umlaufzeit hat eine Bitanzahl von 16 bit.

Vom Master-Timer aus werden alle Stationen synchronisiert.

Die Zeitimpulsbildung erfolgt aller z.B. 128 µs. Sie wird abgeleitet vom 0-Durchgang des entsprechenden unteren Zählerteiles des Master-Timers, in diesem Fall von den unteren 9 bit. Genauer wird der Zeitimpuls 1020 mal 50 ns vor dem Nulldurchgang erzeugt, also im Bsp. beim Zählerstand 204 vor Nulldurchgang.

Der Master-Timer arbeitet dabei mit dem gleichen Takt wie die Telegrammsteuerung. Dabei wird ein Systemtakt von 50 ns verwendet, bei dem jede 5. Taktflanke schaltaktiv wirkt. Dies ist mit einem zentralem Freigabesignal der synchronen Flipflop realisiert. Dieses Freigabesignal wird kurz CLKL benannt (Clock für Telegrammverkehr Lx), der zentrale Takt von 20 MHz wird mit CLKC bezeichnet wird ("C" da auch von der CPU verwendet).

Immer wenn zyklisch dieser Zeitimpuls erzeugt wird, wird unabhängig vom sonst laufendem Telegrammverkehr eine kurze Information aus 2 Byte bestehend gesendet:
- Eines von 4 Kennungs-Command-Byte für den Zeitimpuls
- Ein Datenbyte mit dem Inhalt 255 (alle bit gesetzt).

Der sonst laufende Telegrammverkehr verarbeitet diese Zeitinformation ohne Störung. Für einen aktiven Telegrammerzeuger wird für diese Zeit die Erzeugung von Daten ausgesetzt, damit der Zeitimpuls als Echo weitergereicht wird. Für den Telegrammempfang wirkt der Zeitimpuls wie eine Informationspause.

Der Zeitimpuls wird aufgrund seines Command-Byte erkannt.

Die empfangende Station hat mit der sendenden eine nichtsynchrone Taktlage und einen Takt in der Toleranz bis +/- 1 Promille.

Das Strobe-Signal nach der seriell-parallel-Wandlung im TAXIChip des Empfängers wird aber mit der Taktlage des Senders, da Taktlage des seriellen Signales, erzeugt.

Im Empfänger ist eine Schaltung zur Einsynchronisierung der Datenbytes auf die Taktlage des Empfängers vorhanden. Taktlage meint hier insbesondere die Lage des Strobes bzw. Datenwechsels nach der seriell-parallel-Wandlung (bestimmt vom Takt des Senders) zum zentralem Freigabetakt CLKL. Mit diesem CLKL synchron arbeitet die Telegrammverarbeitung und das Weitersenden des Telegrammes an die folgende Station im Ring. Der CLKL hat eine Periode von 250 ns. Der Zentraltakt für die Verarbeitung CLKC arbeitet mit 50 ns.

Diese Schaltung zur Einsynchronisierung berücksichtigt eine Differenz der Taktfrequenzen zwischen Sendestation und dem eigenem Takt von max. +/- 1 Promille, die sich dahingehend äußert, daß Informationen immer mehr verzögert werden müssen, wenn der Sendetakt z.B. höher ist. Bis zu einem Telegrammende darf dabei kein Datenverlust entstehen.

Diese Synchronisationsschaltung liefert Impulse, mit denen ein Zähler genullt und gestartet werden kann, der die Taktlage von Strobe am seriell-parallel-Wandler des Zeitimpuls-Commandbyte zum CLKL ermittelt, einschließlich einer bei laufendem Telegrammverkehr notwendigen zusätzlichen Verzögerung um 1 CLKL-Periode. Dieser Zähler arbeitet mit dem Systemtakt CLKC (50 ns) und ermittelt damit eine Verzögerung im Bereich 0 bis 9 in Einheiten zu 50 ns. Aufgrund der Taktung mit dem Systemtakt 50 ns ergibt sich hierbei eine Unsicherheit von 50 ns.

Dieser Wert der Verzögerung aufgrund der Einsynchronisierung des empfangenen Signales auf den CLKL wird nun von der empfangenen Zeitinformation subtrahiert. Die Zeitinformation wird aus dem Byte nach dem Zeit-Commandbyte (bits 9 bis 2) und dem Command-Byte (bit 1 und 0) entnommen. Der Master-Timer hat dabei die Information 1020 gesendet, binär 1111 1111 00, siehe oben.

Außerdem wird von der Zeitinformation noch ein 9 bit breit konstant vorgegebener Wert subtrahiert, der enthält
- konstante Verzögerung des seriellen Eingangssignales zum seriellen Ausgangssignal im Ring aufgrund der inneren Verarbeitung,
- Laufzeit des seriellen Signales vom Sender zum Empfänger aufgrund physikalischer Verzögerungszeiten, insbesondere Laufzeit im LWL.

Mit dieser Zeitinformation wird zum CLKL-synchronem Zeitpunkt ein 10 bit breiter Zähler geladen und gestartet, der mit dem Systemtakt CLKC abzählt. Bei Erreichen des Nulldurchganges wird dieser Zähler gestopt. Der Nulldurchgang erfolgt dabei im Rahmen des 50 ns-CLKC-Taktes zeitsynchron mit dem Nulldurchgang des Mastertimers. Dies ist der Stellimpuls des Timers in dieser Station.

Die Zeitinformation wird als Echo weitergesendet, und zwar mit der korrigierten Zeitinformation wie eben beschrieben. Die nachfolgende Station korrigiert wiederum diese Zeitinformation unter Beachtung der zwei Komponenten: Synchronisierung der Lage der empfangenen Information zur Verarbeitung und Laufzeit des Signales. Ein Fehler von 50 ns aufgrund der nichtfeststellbaren Lage der CLKC-Takte der Stationen wird sich dabei aufkummulieren und bestimmt die Genauigkeit.

(Sollte auch diese Genauigkeit wegen CLKC verbessert werden, dann muß der CLKC von einer PLL-Schaltung synchron mit der empfangenen Information gebildet werden. Das ist aber im vorliegenden Fall weder realisiert noch wird es als nötig erachtet).

Mit dem Stellimpuls des Timers ist auf 50 ns (CLKC) genau der Zeitpunkt festgelegt, zu dem der Timer in den unteren z.B. 9 bit bei 250 ns Auflösung den Nulldurchgang haben soll. Bei Differenz der Taktfrequenzen kann der Zähler aber einen Stand abweichend von 0 haben, und zwar geringfügig abweichend, wenn laufend Zeitinformationen empfangen wurden.

Diese Abweichung des Zählerstandes und des Vorteilers zum Timer wird in einem Register aufgefangen.

Nun wird aufgrund der positiven oder negativen Abweichung nach aquidistanten Zeitpunkten, z.B. aller 4 us, der Vorteiler für den Timer vom normalem Wert 5 (CLKC von 50 ns zur Auflösung zu 250 ns) auf den Wert 4 oder 6 geändert, je nachdem ob eine positive oder negative Abweichung erkannt wurde. Gleichzeitig wird für diesen Takt die Abweichung im Register abgezählt (dies ist ein Zählerregister).

Ein Zeit-Schritt wird damit 200 oder 300 ns dauern, gefolgt von normalen 250 ns.

Dies wird solange wiederholt, bis die Abweichung 0 erreicht hat. Bei der größten Abweichung aufgrund der Toleranz der Takte muß die 0 erreicht sein, bevor der folgende Zeitimpuls kommt.

Aus dem Vorteiler für den Zähler wird der zentrale Freigabetakt CLKE für alle zeitsynchronen Schaltungen (nicht für den Telegrammverkehr!) abgeleitet. Dieser CLKE läuft damit in allen Stationen synchron im Rahmen der o.g. Genauigkeit.

Das Stellen des Zählers auf die Gesamtzeit erfolgt einmal bei der Initialisierung per Software über ein normales Telegramm. Beim ersten Zeitimpuls wird dann der Zähler gestartet. Jede Abweichung über den Rahmen der Taktfrequenztoleranz hinaus wird als schwere Systemstörung erkannt.

Das erfindungsgemäße Umrichtersystem kommt bevorzugt zur Versorung elektrischer Antriebe und zur Netzkompensation in Frage. Es ist weiterhin bevorzugt geeignet für Anwendungen, bei denen Leistungen im Megawattbereich geregelt und gestellt werden müssen.

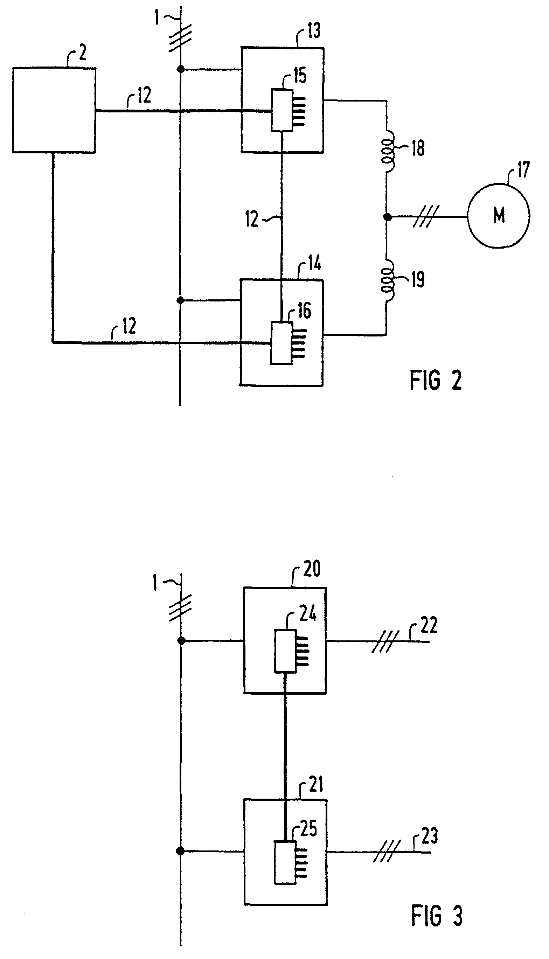

FIG 2 zeigt ein erfindungsgemäßes Umrichtersystem mit zwei Umrichtern zur Steuerung bzw. Regelung eines Motors 17, wobei die Ausgänge der Umrichter 13 und 14 über Induktivitäten 18 und 19 getrennt sind. Die Energieversorgung erfolgt über ein Energieversorgungsnetz 1. Die Steuerung der Leistungshalbleiter der Umrichter 13 und 14 erfolgt mittels eines Automatisierungsgerätes 2, Lichtwellenleitern 12 und intelligenten Schnittstellen 15 und 16 in analoger Weise wie die Regelung des Umrichtersystems aus FIG 1.

FIG 3 zeigt ein Umrichtersystem mit zwei Umrichtern 20 und 21, wobei die Steuerung der Spannung bzw. des Stroms an den Ausgängen 22 und 23 der Umrichter 20 und 21 mittels eines Automatisierungsgerätes 24 erfolgt. Das Automatisierungsgerät 24 ist in den Umrichter 20 integriert und steuert direkt die Leistungshalbleiter des Umrichters 20. Der Umrichter 21 weist eine intelligente Schnittstelle 25 auf, die mit dem Automatisierungsgerät 24 über einen Lichtwellenleiter 12 verbunden ist. Die im Automatisierungsgerät 24 erzeugten Steuerungsbefehle für die Leistungshalbleiter des Umrichters 21 werden über den Lichtwellenleiter 12 an die intelligente Schnittstelle 25 übertragen, die die Leistungshalbleiter des Umrichters 21 entsprechend den Steuerungsbefehlen aus dem Automatisierungsgerät 24 ansteuert. Die Energieversorgung der Umrichter 20 und 21 erfolgt über ein Energieversorgungsnetz 1.

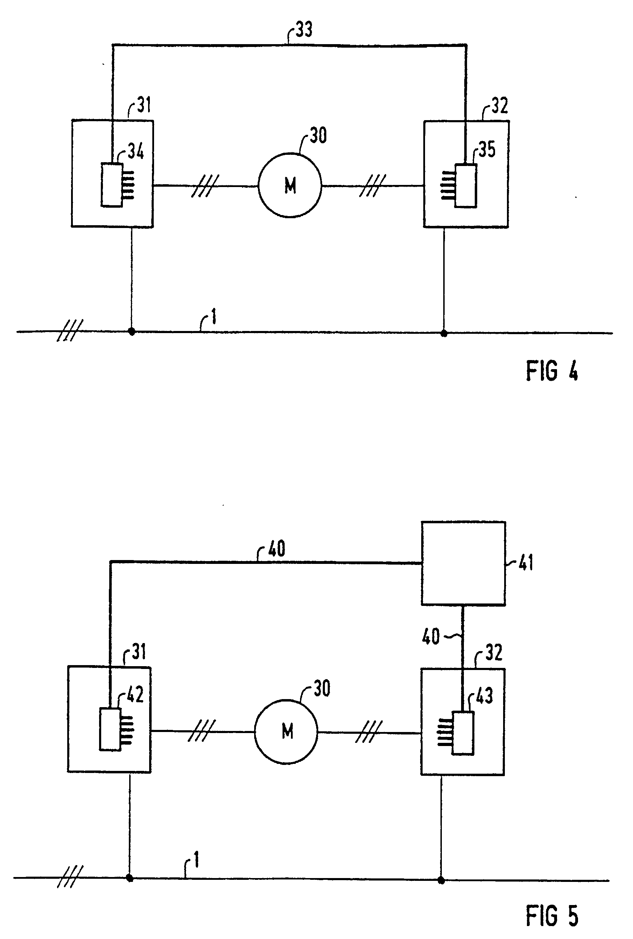

FIG 4 zeigt ein erfindungsgemäßes Umrichtersystem zur Steuerung eines Motors 30 in Tandemschaltung mittels zwei Umrichtern 31 und 32, die über ein Energieversorgungsnetz 1 mit Energie versorgt werden. Die Steuerung des Umrichters 31 erfolgt über ein Automatisierungsgerät 34, über das ebenfalls der Umrichter 32 gesteuert wird, der mit dem Automatisierungsgerät 34 über einen Lichtwellenleiter 33 und eine intelligente Schnittstelle 35 verbunden ist. Die Steuerungsbefehle des Automatisierungsgerätes 34 werden von der intelligenten Schnittstelle 35 an die Leistungshalbleiter des Umrichters 32 weitergegeben.

FIG 5 zeigt ebenfalls einen Motor 30 mit zwei Umrichtern 31 und 32 in einer Tandemschaltung. Die Energieversorgung erfolgt dabei über ein Energieversorgungsnetz 1. Die Leistungshalbleiter der Umrichter 31 und 32 werden über ein Automatisierungsgerät 41 gesteuert, das über Lichtwellenleiter 40 mit intelligenten Schnittstellen 42 und 43 verbunden ist. Die in die Umrichter 31 und 32 integrierten intelligenten Schnittstellen 42 und 43 geben die Steuerungsbefehle des Automatisierungsgerätes 41 an die Leistungshalbleiter der Umrichter 31 und 32 weiter.

## Patentansprüche

1. Umrichtersystem mit mehreren Umrichtern (3,4,5;13,14;20, 21;31,32), insbesondere zur Versorgung von elektrischen Antrieben (17,30) mit Wechselstrom bzw. -spannung mit spezifisch angepaßter Frequenz oder zur dynamischen Netzkompensation, wobei diese Umrichter (3,4,5;13,14;20,21;31,32) abschaltbare Leistungshalbleiter aufweisen,
- wobei der Stromfluß durch die Leistungshalbleiter durch Einstellung der Ein- bzw. Ausschaltzeitpunkte für die Leistungshalbleiter beeinflußbar ist,
- wobei die gewünschte Gesamtspannung bzw. der gewünschte Gesamtstrom am Ausgang der Umrichter (3,4,5;13,14;20,21;31, 32) durch geeignete Steuerung der Ein- bzw. der Ausschaltzeitpunkte der einzelnen Leistungshalbleiter der Umrichter (3,4,5;13,14;20,21;31,32) beeinflußbar ist,
- wobei diesen Umrichtern (3,4,5;13,14;31,32) zumindest ein von ihm räumlich getrenntes Automatisierungsgerät (2,41), das logisch mit den Leistungshalbleitern über zumindest ein Bussystem verbunden ist, zugeordnet ist, worüber die gewünschten Ein- bzw. Ausschaltzeitpunkte der einzelnen Leistungshalbleiter einstellbar sind,
- wobei jedem Umrichter (3,4,5;13,14;20,21;31,32) eine frei programmierbare Busschnittstelle (6,7,8;15,16;25,35;42,43) zugeordnet ist, die die gewünschten Ein- bzw. Ausschaltzeitpunkte für die Leistungshalbleiter des Umrichters (3,4,5;13,14;21;31,32) empfängt und die Leistungshalbleiter zum gewünschten Zeitpunkt ein- bzw. ausschaltend ausgebildet ist,
- und wobei das Automatisierungsgerät (2,41) oder ein Umrichter (3,4,5;13,14;20,21;31,32) des Umrichtersystems ein Zeitnormal sendend ausgebildet ist, das die einzelnen frei programmierbaren Schnittstellen (6,7,8;15,16;25,35;42,43) mit einer Präzision von 10µs oder genauer zeitlich synchronisiert.

2. Umrichtersystem nach Anspruch 1,
**dadurch gekennzeichnet,**
**daß** das Bussystem als serielles Bussystem ausgebildet ist. ist.

3. Umrichtersystem nach Anspruch 2,
**dadurch gekennzeichnet,**
**daß** das Bussystem als Lichtwellenleiter (12,33,40) ausgebildet ist.

4. Umrichtersystem nach Anspruch 2 oder 3,
**dadurch gekennzeichnet,**
**daß** das Bussystem als Ring, der zumindest ein Automatisierungsgerät (2) und zumindest zwei Umrichter (3,4,5;13,14) verbindet, ausgebildet ist.

5. Umrichtersystem nach Anspruch 1,
**dadurch gekennzeichnet,**
**daß** das Zeitnormal die einzelnen frei programmierbaren Schnittstellen (6,7,8;15,16;25,35;42,43) mit einer Präzision von 50 ns oder genauer zeitlich synchronisiert.

6. Umrichtersystem nach einem oder mehreren der Ansprüche 1 bis 5, **dadurch gekennzeichnet,**
**daß** das Umrichtersystem ein einziges Automatisierungssystem (2,24,34,41) aufweist.

7. Umrichtersystem nach Anspruch 6,
**dadurch gekennzeichnet,**
**daß** das Automatisierungsgerät (24,34) räumlich einem Umrichter (20,31) zugeordnet ist.

8. Umrichtersystem nach einem oder mehreren der Ansprüche 1 bis 7, **dadurch gekennzeichnet,**
**daß** die frei programmierbaren Schnittstellen (6,7,8;15,16;25, 35;42,43) Meßwerte bezüglich Strom und Spannung über das Bussystem an das Automatisierungsgerät (2,41) übertragend ausgebildet ist.

9. Umrichtersystem nach einem oder mehreren der Ansprüche 1 bis 8,
**dadurch gekennzeichnet,**
**daß** das Bussystem die Informationen, wie z.B. Ein- und/oder Ausschaltzeitpunkt, Meßwerte oder das Zeitnormal, über das Bussystem mit einer Rate von mindestens 5 MBaud, vorzugsweise mit einer Rate von mindestens 20 Mbaud übertragend ausgebildet ist.

10. Umrichtersystem nach Anspruch 1,
**dadurch gekennzeichnet,**
**daß** das Bussystem die Informationen, wie z.B. Ein- und/oder Ausschaltzeitpunkt, Meßwerte oder das Zeitnormal, mit einer Rate von 40 Mbaud übertragend ausgebildet ist.

11. Umrichtersystem nach einem oder mehreren der Ansprüche 1 bis 10,
**dadurch gekennzeichnet,**
**daß** die Umrichter (3,4,5;13,14;20,21;31,32) jeweils in bezug auf Dauerlast in einem Leistungsbereich von 1 bis 20 Megawatt, vorteilhafterweise von 2 bis 10 Megawatt, arbeitend ausgebildet sind.

12. Umrichtersystem nach einem oder mehreren der Ansprüche 1 bis 11,
**dadurch gekennzeichnet,**
**daß** die Umrichter (3,4,5;13,14;20,21;31,32) jeweils in bezug auf Stoßlast in einem Leistungsbereich von 2 bis 30 Megawatt, vorteilhafterweise von 4 bis 20 Megawatt, arbeitend ausgebildet sind.

## Claims

1. Converter system having a number of converters (3, 4, 5; 13, 14; 20, 21; 31, 32), in particular for supplying electrical drives (17, 30) with alternating current or voltage at a specifically matched frequency or for a dynamic power factor correction, with these converters (3, 4, 5; 13, 14; 20, 21; 31, 32) having power semiconductors which can be switched off,
- it being possible to influence the current flow through the power semiconductors by adjusting the times at which the power semiconductors are switched on and off,
- it being possible to influence the desired overall voltage or the desired overall current at the output of the converters (3, 4, 5; 13, 14; 20, 21; 31, 32) by suitable control of the times at which the individual power semiconductors in the converters (3, 4, 5; 13, 14; 20, 21; 31, 32) are switched on and off,
- with these converters (3, 4, 5; 13, 14; 20, 21; 31, 32) being assigned at least one automation unit (2, 41), which is physically separated from it and is logically connected to the power semiconductors via at least one bus system, by means of which the desired times at which the individual power semiconductors are switched on and off are adjustable,
- with each converter (3, 4, 5; 13, 14; 20, 21; 31, 32) being assigned a freely programmable bus interface (6, 7, 8; 15, 16; 25, 35; 42, 43) which receives the desired times at which the power semiconductors in the converter (3, 4, 5; 13, 14; 20, 21; 31, 32) are switched on and off, and is designed to switch the power semiconductors on and off at the desired time,
- and with the automation unit (2, 41) or a converter (3, 4, 5; 13, 14; 20, 21; 31, 32) in the converter system being designed such that it transmits a time standard, which synchronizes the individual freely programmable interfaces (6, 7, 8; 15, 16; 25, 35; 42, 43) in time with a precision of 10 µs or less.

2. Converter system according to Claim 1,
**characterized**
**in that** the bus system is designed as a serial bus system.

3. Converter system according to Claim 2,
**characterized**
**in that** the bus system is designed as an optical waveguide (12, 33, 40).

4. Converter system according to Claim 2 or 3,
**characterized**
**in that** the bus system is designed as a ring which connects at least one automation unit (2) and at least two converters (3, 4, 5; 13, 14).

5. Converter system according to Claim 1,
**characterized**
**in that** the time standard synchronizes the individual freely programmable interfaces (6, 7, 8; 15, 16; 25, 35; 42, 43) in time with a precision of 50 ns or less.

6. Converter system according to one or more of Claims 1 to 5,
**characterized**
**in that** the converter system has a single automation system (2, 24, 34, 41).

7. Converter system according to Claim 6,
**characterized**
**in that** the automation unit (24, 34) is physically assigned to a converter (20, 31).

8. Converter system according to one or more of Claims 1 to 7,
**characterized**
**in that** the freely programmable interfaces (6, 7, 8; 15, 16; 25, 35; 42, 43) are designed to transmit measurements of current and voltage via the bus system to the automation unit (2, 41).

9. Converter system according to one or more of Claims 1 to 8,
**characterized**
**in that** the bus system is designed to transmit the information, such as the time for switching on and/or off, measurements or the time standard for example, via the bus system, at a rate of at least 5 Mbaud, preferably at a rate of at least 20 Mbaud.

10. Converter system according to Claim 1,
**characterized**
**in that** the bus system is designed to transmit information, such as the time of switching on and/or off, measurements or the time standard for example, at a rate of 40 Mbaud.

11. Converter system according to one or more of Claims 1 to 10,
**characterized**
**in that** the converters (3, 4, 5; 13, 14; 20, 21; 31, 32) are each designed to operate with a continuous load in a rating range from 1 to 20 megawatts, advantageously from 2 to 10 megawatts.

12. Converter system according to one or more of Claims 1 to 11,
**characterized**
**in that** the converters (3, 4, 5; 13, 14; 20, 21; 31, 32) are each designed to operate with a surge load in a rating range from 2 to 30 megawatts, advantageously from 4 to 20 megawatts.

## Revendications

1. Système convertisseur ayant plusieurs convertisseurs (3, 4, 5 ; 13, 14 ; 20, 21 ; 31, 32), notamment pour l'alimentation de moteurs électriques (17, 30) en courant alternatif ou en tension alternative à une fréquence spécifiquement adaptée ou pour la compensation dynamique de réseau, ces convertisseurs (3, 4, 5 ; 13, 14 ; 20, 21 ; 31, 32) comportant des semi-conducteurs de puissance,
- dans lequel le flux de courant dans les semi-conducteurs de puissance peut être influencé par le réglage des instants de branchement et de débranchement pour les semi-conducteurs de puissance,
- dans lequel la tension totale souhaitée ou le courant total souhaité à la sortie des convertisseurs (3, 4, 5 ; 13, 14 ; 20, 21 ; 31, 32) peuvent être influencés par une commande appropriée des instants de branchement et de débranchement des différents semi-conducteurs de puissance des convertisseurs (3, 4, 5 ; 13, 14 ; 20, 21 ; 31, 32),
- dans lequel il est associé à ces convertisseurs (3, 4, 5 ; 13, 14 ; 31, 32) au moins un appareil d'automatisation (2, 41) qui est séparé de lui dans l'espace et qui est relié au niveau logique aux semi-conducteurs de puissance par l'intermédiaire d'au moins un système de bus, les instants de branchement et de débranchement souhaités des différents semi-conducteurs de puissance pouvant être réglés par son intermédiaire,
- dans lequel il est associé à chaque convertisseur (3, 4, 5 ; 13, 14 ; 20, 21 ; 31, 32) une interface de bus (6, 7, 8 ; 15, 16 ; 25, 35 ; 42, 43) librement programmable qui reçoit les instants de branchement et de débranchement souhaités pour les semi-conducteurs de puissance du convertisseur (3, 4, 5 ; 13, 14 ; 21 ; 31, 32) et qui est conçue pour brancher et débrancher les semi-conducteurs de puissance à l'instant souhaité,
- et dans lequel l'appareil d'automatisation (2, 41) ou un convertisseur (3, 4, 5 ; 13, 14 ; 20, 21 ; 31, 32) du système convertisseur est conçu de manière à émettre un étalon de temps qui synchronise les différentes interfaces librement programmables (6, 7, 8 ; 15, 16 ; 25, 35 ; 42, 43) avec une précision de 10 µs ou plus précisément dans le temps.

2. Système convertisseur selon la revendication 1,
**caractérisé par le fait que** le système de bus est conçu comme un système de bus sériel.

3. Système convertisseur selon la revendication 2,
**caractérisé par le fait que** le système de bus est conçu comme un guide d'ondes lumineuses (12, 33, 40).

4. Système convertisseur selon la revendication 2 ou 3,
**caractérisé par le fait que** le système de bus est conçu comme un anneau qui relie au moins un appareil d'automatisation (2) et au moins deux convertisseurs (3, 4, 5 ; 13, 14).

5. Système convertisseur selon la revendication 1,
**caractérisé par le fait que** l'étalon de temps synchronise les différentes interfaces librement programmables (6, 7, 8 ; 15, 16 ; 25, 35 ; 42, 43) avec une précision de 50 ns ou plus précisément dans le temps.

6. Système convertisseur selon une ou plusieurs des revendications 1 à 5,
**caractérisé par le fait que** le système convertisseur comporte un seul système d'automatisation (2, 24, 34, 41).

7. Système convertisseur selon la revendication 6,
**caractérisé par le fait que** l'appareil d'automatisation (24, 34) est associé dans l'espace à un convertisseur (20, 31).

8. Système convertisseur selon une ou plusieurs des revendications 1 à 7,
**caractérisé par le fait que** les interfaces librement programmables (6, 7, 8 ; 15, 16 ; 25, 35 ; 42, 43) sont conçues pour transmettre des valeurs mesurées en courant et tension par l'intermédiaire du système de bus à l'appareil d'automatisation (2, 41).

9. Système convertisseur selon une ou plusieurs des revendications 1 à 8,
**caractérisé par le fait que** le système de bus est conçu pour transmettre les informations, par exemple instant de branchement et/ou de débranchement, valeurs mesurées ou étalon de temps, par l'intermédiaire du système de bus avec un débit d'au moins 5 MBaud, de préférence avec un débit d'au moins 20 MBaud.

10. Système convertisseur selon la revendication 1,
**caractérisé par le fait que** le système de bus est conçu pour transmettre les informations, par exemple instant de branchement et/ou de débranchement, valeurs mesurées ou étalon de temps, avec un débit de 40 MBaud.

11. Système convertisseur selon une ou plusieurs des revendications 1 à 10,
**caractérisé par le fait que** les convertisseurs (3, 4, 5 ; 13, 14 ; 20, 21 ; 31, 32) sont conçus pour travailler chacun par rapport à la charge permanente dans une plage de puissance allant de 1 à 20 Mégawatts, avantageusement de 2 à 10 Mégawatts.

12. Système convertisseur selon une ou plusieurs des revendications 1 à 11,
**caractérisé par le fait que** les convertisseurs (3, 4, 5 ; 13, 14 ; 20, 21 ; 31, 32) sont conçus pour travailler chacun par rapport à la charge ponctuelle dans une plage de puissance allant de 2 à 30 Mégawatts, avantageusement de 4 à 20 Mégawatts.
